# EUROPEAN PATENT SPECIFICATION

(11) **EP 3 213 880 B1**
(45) Date of publication and mention of the grant of the patent: **09.06.2021**
(21) Application number: 17158542.5
(22) Date of filing: 28.02.2017
(51) Int. Cl.: B25F 5/00, B25B 27/02

(54) **HYDRAULIC PUMP FOR A HYDRODYNAMIC COMPRESSION TOOL**
HYDRAULISCHE PUMPE FÜR EIN HYDRODYNAMISCHES KOMPRESSIONSWERKZEUG
POMPE HYDRAULIQUE POUR UN OUTIL DE COMPRESSION HYDRODYNAMIQUE

(30) Priority: 02.03.2016 IT UB20161240
(43) Date of publication of application: 06.09.2017
(73) Proprietor: CEMBRE S.p.A., I-25135 Brescia (IT)
(72) Inventor: BAREZZANI, Gualtiero, I-25135 Brescia (IT); VEGLIANTI, Samuel, I-25135 Brescia (IT)
(74) Representative: Leihkauf, Steffen Falk

(56) References cited:
- WO-A1-2016/005838
- US-A1- 2010 154 599
- US-B2- 7 062 998

## Description

The present invention relates to a hydraulic pump for a hydrodynamic compression and/or cutting tool and to a hydrodynamic compression and/or cutting tool.

Hydrodynamic compression and/or cutting tools are often used to perform determined connection operations, e.g. for crimping connectors about electrical wires or hydraulic pipes and for compressing rivets, or for determined cutting operations, e.g. cutting electric wires during electric system installation and maintenance.

Such tools comprise an electric motor and a hydraulic pump which causes an increase of a hydraulic liquid pressure operating on a piston to move the latter against the bias of a pressure spring. In turn, the piston is connected to a movable jaw so as to move the jaw, during the compression operation, with respect to a fixed jaw of the tool. The jaws may be shaped and/or provided with interchangeable accessory elements so as to adapt to a particular object, e.g. an electrical contact to be compressed or a metallic bar to be cut.
WO2016/005838, for example, describes a method of operating a hydrodynamic compression tool and a hydrodynamic compression tool.

The compression tools are very often used in external environments, e.g. along railway lines far from buildings provided with a connection to the electric power network, and require an electric energy source of their own, i.e. a portable electric accumulator either integrated in or applied on the tool. The accumulator provides a limited amount of electric energy which determines the autonomy, i.e. the number of compression/cutting operations which can be performed by the tool. Hence, a need is felt to control and perform the work cycles of the compression and/or cutting tool so as to reduce electric energy consumption.

Most compression and cutting operations, in particular those performed on electric cables, are hindered by very narrow space conditions or are performed in conditions (live electric conductors) which are potentially very dangerous for the operator and harmful for the tool. Therefore, the need is felt to design the compression and/or cutting tool so as to reach the part to be compressed or cut easily while reducing the risk of injury to the operator and limiting potential damage to the tool itself.

A third need is that of being able to control the result of the compression and cutting operations with appropriate rapidly in order to reduce the time needed to perform the job.

lt is thus the object of the present invention to provide an electro-hydraulic pump for hydrodynamic compression and/or cutting tools, having features such to solve at least some of the drawbacks mentioned with reference to the prior art.

These and other objects are achieved by means of an electro-hydraulic pump according to claim 1. The dependent claims relate to advantageous embodiments.

According to an aspect of the invention, an electro-hydraulic pump for hydrodynamic compression and/or cutting tools comprises:
- a pump housing,
- an accumulator seat, adapted to receive the accumulator and having electric terminals which implement an electric contact with the accumulator,
- an electric motor, supported by the pump housing which can be powered by the accumulator coupled to the accumulator housing,
- a hydrodynamic group, supported by the pump housing and connected to the electric motor so as to increase the pressure of a hydraulic liquid in response to the movement of the electric motor,
- a pressure hose, having a pump end connected to the pump housing and in communication with the hydrodynamic group, and an opposite work end connectible to a work head of the compression and/or working tool spaced apart from the pump housing, so as to communicate the pressure of the hydraulic liquid to the work head,
- a flexible control cable, having one pump end connected to the pump housing and an opposite control end, to which a hand held remote control is connected, for remote actuation and control of the electric motor,
wherein the hand held remote control comprises:
- a push-button panel for manually starting the electric motor and manually selecting an operation mode of the electro-hydraulic pump from a plurality of preset operation modes,
- a multifunction display, which displays the selected operation mode.

The pressure hose allows to access the part to be cut or compressed by means of the work head of the tool only, thus being able to operate in extremely small work spaces and position the pump housing at a distance such as not to interfere with the work space and to be protected against possible damage, e.g. due to explosions, sparks, flames in case of cutting and compressing of live electric cables or pipes of explosive or flammable materials.

The flexible control cable and the hand held remote control, provided with display and push-button panel, allow to select and visually check the selected operation mode near the work space and when the work head is positioned on the part to be either compressed or cut, without needing to move away from the work space to set the operation mode on the pump body and without needing to approach the entire pump body to the work space. Being able to perform the steps of positioning of the work head, select the pump operation mode and visually check the correspondence between the operation to be performed (cutting, compressing, opening the jaws and closing force adapted to the size and the material of the part) and the selected operation mode, in a single place and without movements of the pump body and of the operator, saves time and reduces the possibility of errors.

Finally, during a cutting or compressing operation, the operator may choose his or her position, e.g. away from both the work space and the pump body or in a position from where the work space but not the pump body can be observed, or vice versa, but by means of the display on the hand held remote control can always visually control the operation mode, modify it and view further parameters or information related to the compression/cutting being performed or which has just ended, before even deciding to re-approach the work space to prepare the successive work cycle.

ln order to understand the invention and better appreciate the advantages thereof, the description of some embodiments will be provided below by way of non-limiting example with reference to the drawings, in which:

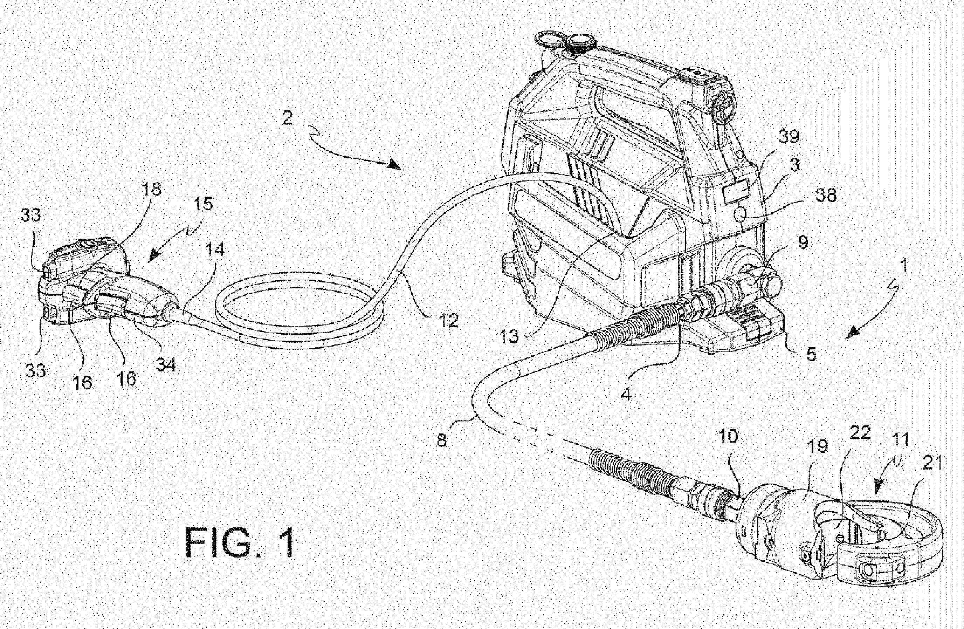

- figure 1 is a perspective view of a compression/cutting tool with a hydraulic pump according to an embodiment;

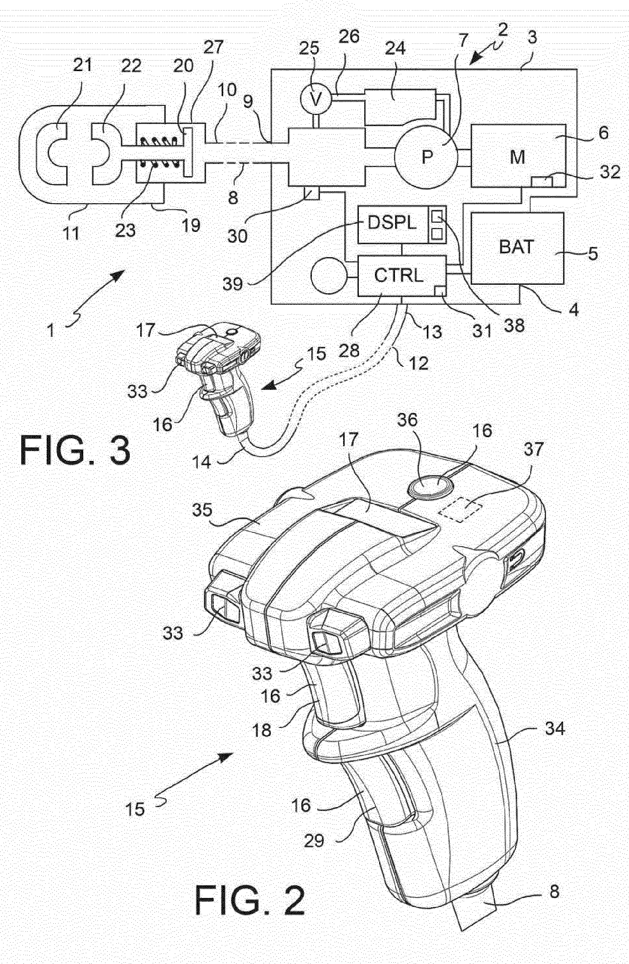

- figure 2 is a perspective view of a hand held remote control of the hydraulic pump in figure 1,
- figure 3 shows a diagram of components and functional groups of a compression and/or cutting tool according to an embodiment,
- figures from 4A to 16 show exemplary screenshots of a multifunction display of a hand held remote control of the hydraulic pump according to embodiments,

With reference to the figures, an electro-hydraulic pump 2 for hydrodynamic compression and/or cutting tools 1 comprises:
- a pump housing 3,
- an accumulator seat 4, adapted to receive the accumulator 5 and having electric terminals which make an electric contact with the accumulator 5,
- an electric motor 6, supported by the pump housing 3 which can be powered by the accumulator 5,
- a hydrodynamic group 7 (pumping group) supported by the pump housing 3 and connected to the electric motor 6 to increase the pressure of a hydraulic liquid in response to the movement of the electric motor 6,
- an electronic control circuit 28 connected to the electric motor 6 and with the accumulator 5 for controlling the electric motor 6,
- a flexible pressure hose 8 having a pump end 9 connected to the pump housing 3 and in communication with the hydrodynamic group 7, and an opposite work end 10 connectible to a work head 11 of the tool 1 which may be spaced apart from the pump housing 3, so as to communicate the hydraulic liquid pressure to the work head 11,
- a flexible control cable 12 having one pump end 13 removably connected to the pump housing 3 and connected to the control circuit 28, and an opposite control end 14, to which a hand held remote control 15 is connected for remotely actuating and controlling the electric motor 6.

The hand held remote control 15 comprises a push-button panel 16 which allows to manually start the electric motor 6 and manually select an operation mode of the electro-hydraulic pump 2 from a plurality of pre-set operation modes, as well as a multifunction display 17 (directly fitted on the hand held remote control 15) which shows the selected operation mode.

The flexible pressure hose 8 allows to access the part to be cut or compressed by means of the work head 11 alone of the tool 1, thus being able to operate in extremely small work spaces and position the pump housing 3 at a distance such as not to interfere with the work space and to be protected against possible damage, e.g. due to explosions, sparks, flames in case of cutting and compressing of live electric cables or pipes of explosive or flammable materials.

The flexible control cable 12 and the hand held remote control 15 are provided with display 17 and push-button panel 16 for selecting and visually checking the operation mode near the work space and when the work head 11 is positioned on the part to be either compressed or cut, without needing to move away from the work space to set the operation mode on the pump body 3 and without needing to approach the entire pump body 3 to the work space. By being able to perform the steps:
- positioning the work head 11, selecting the operation mode of the pump 2 and
- visually checking correspondence between the operation to be performed (cutting, compressing, jaw opening and closing force adapted to the size and material of the part) and the selected operation mode,
in a single place and without moving the pump body 3 and the operator, time is saved and the possibility of errors is reduced.

Finally, during a cutting or compression operation, the operator may choose his or her position, e.g. away from both the work area and the pump body or in a position from where the work space but not the pump body can be observed, or vice versa. By virtue of the display 17 on the hand held remote control 15, the operator can always visually control the operation mode, modify it and view further parameters or information related to the compression/cutting which is being performed or has just ended, even before deciding to approach the work space to prepare the successive work cycle.

### Detailed description of the work head

The work head 11 may comprise a body 19 with an actuation cylinder 27 which receives an actuation piston 20 movable by means of the pressure fluid.

The work head 11 further comprises two jaws 21, 22 connected to the body 19 in mutually movable manner and connected to the driving piston 20 so that, in response to the movement of the driving piston 20, the jaws 21, 22 perform a relative movement between an open position and a closed position to perform either the compression or the cutting.

A return spring 23 acts on the actuation piston 20 so as to elastically bias it to a rest position, in which the jaws 21, 22 are in the open position.

The work head 11 is removably connectible to the pressure pipe 8. Alternatively or additionally, the pressure hose 8 may be removably connected to the pump housing 3.

### Detailed description of the hydrodynamic pumping group

According to an embodiment, the hydrodynamic pump 7 comprises a tank 24, a pumping cylinder-piston group and a maximum pressure valve 25.

The pumping cylinder-piston group may comprise a pumping cylinder with an intake opening connected to the tank 24 by means of a non-return valve, which allows the flow of hydraulic oil from the tank 24 into the pumping cylinder, and a discharge opening in communication with the pressure hose 8 and, therefore, with the actuation cylinder 27 of the work head 11. A non-return valve is arranged in the discharge opening to allow the flow of hydraulic oil from the pumping cylinder towards the actuation cylinder 27, but not the other way. A pumping piston may be accommodated in the pumping cylinder and coupled so as to translate together with a pivoting member actuated by the electric motor 6.

The maximum pressure valve 25 may be arranged in a return pipe 26 which connects the actuation cylinder 27 to the tank 24.

ln this manner, the actuation of the electric motor 6 operates the hydrodynamic group 7 (pumping group) and moves the jaws 21, 22 from the open position either towards or to the closed position until a predetermined maximum calibration pressure is reached in the actuation cylinder 27. When the maximum calibration pressure is reached, the maximum pressure valve 25 automatically opens the fluid return duct 26 to discharge (at least part of) the pressurised liquid from the actuation cylinder 27 into the tank 24.

### Detailed description of the operation modes

The selectable operation modes may comprise a working or hydraulic liquid pressurisation mode (often characterised by an interruption criterion of the pressurisation or of the actuation of the motor 6) and a return mode of the actuation piston 20 towards its rest position (open jaws) or of hydraulic fluid de-pressurisation.

ln a first return mode (manual return), which can be selected by means of the push-button panel 16 and viewed by means of the display 17, after the hydraulic liquid pressurisation ends and thus the work cycle is completed, the hydraulic liquid depressurisation (e.g. by opening the return valve 25 performed by means of a valve opening actuator, e.g. a solenoid valve, actuated by the control circuit 28) and the consequent return of the jaws 21, 22 either to or towards their open position occurs by pressing the manual release button 29 of the push-button panel 16 for the time needed to reach the desired opening width of the jaws 21, 22.

ln a second return mode (voluntary semi-automatic return), which can be selected by means of the push-button panel 16 and viewed by means of the display 17, after the hydraulic liquid pressurisation ends and thus the work cycle is completed, the depressurisation or a further depressurisation and hydraulic liquid return (e.g. by opening the return valve 25 performed by means of a valve opening actuator, e.g. solenoid, actuated by the control circuit 28) and the consequent return of the jaws 21, 22 either to or towards their open position is delayed until the manual pressure on the manual actuation button 18 is released, and only when the manual actuation button 18 is released the return and the further depressurisation of the hydraulic liquid begins (e.g. by opening the return valve 25 performed by means of a valve opening actuator, e.g. solenoid, actuated by the control circuit 28) and continues automatically until the manual actuation button 18 is pressed again, and in absence of a timely actuation of the actuation button 18, until the rest position of the actuation piston 20, which corresponds to the open position of the jaws 21, 22, is reached.

ln a third return mode (involuntary automatic return), which can be selected by means of the push-button panel 16 and viewed by means of the display 17, after having ended the hydraulic liquid pressurisation and thus the work cycle is completed, the hydraulic liquid depressurisation (e.g. by opening the return valve caused by the pressure of the hydraulic liquid or actuated by the control circuit 28) and the consequent return of the jaws 21, 22 either to or towards their open position, occurs automatically and without voluntary activation by the operator. This operation mode, although provided as possible embodiment, however displays the disadvantage of depriving the operator from the possibility of checking the final state reached when the compression cycle is completed.

In a first operating mode, which can be combined with any one of the first, second or third return modes and either preset or selectable by means of the push-button panel 16 and viewed by means of the display 17, the control circuit 28 stops the motor 6 automatically when the maximum pressure valve 25 opens when the maximum calibration pressure is reached.

ln a second work mode, which can be combined with any one of the first, second or third return modes and with the first work mode, and which can be possibly selected by means of the push-button panel 16 and viewed by means of the display 17, the control circuit 28 stops the motor 6 automatically in dependency of a comparison of at least one predetermined reference parameter (pressure limit, temperature limit) with a respective work parameter which is detected (detected pressure, detected temperature) by means of a sensor (pressure sensor, temperature sensor).

This contributes to saving electric energy and increasing the autonomy of the tool 1.

ln all cases, the electric motor 6 is stopped by the control circuit 28 when the actuation button 18 is released. The stopping of the electric motor 6 determines the completion or interruption of the step of hydraulic liquid pressurising.

ln a third operating mode, which can be combined with any one of the first, second or third return modes and which can be selected by means of the push-button panel 16 and viewed by means of the display 17, the control circuit 28 either controls or influences the motor 6 and/or the hydrodynamic unit 7, in dependency of a predetermined work scheme for a compression operation.

ln a fourth operating mode, which can be combined with any one of the first, second or third return modes and which can be selected by means of the push-button panel 16 and viewed by means of the display 17, the control circuit 28 controls or influences the motor 6 and/or the hydrodynamic unit 7, according to a predetermined work scheme for a cutting operation.

ln a fifth operating mode, which can be combined with any one of the first, second or third return modes and which can be selected by means of the push-button panel 16 and viewed by means of the display 17, the control circuit 28 controls or influences the motor 6 and/or the hydrodynamic unit 7, according to a predetermined work scheme for a punching operation.

The third, fourth or fifth work modes may include the second work mode and mutually differ, e.g. in the choice of the work parameter and/or of the comparison reference value and/or in the viewing mode of the display 17.

The compression mode is used to deform a connector on a conductor by means of inserts applied on the work head, wherein the end of the work cycle is defined by the reaching of a preset maximum pressure and the consequent stopping of the motor.
Cutting mode is used to cut an electric conductor by means of blades with mutual scissor, guillotine or rotation movement, wherein the end of the cycle is defined by the completion of the cutting of the conductor which is either detected automatically by the control circuit (e.g. by means of a pressure sensor, a sensor of the electric quantities of the motor or a sensor of the relative position of the blades) or recognised by the operator.
Punching mode is used to shear strips or metal plates, by means of a punch and a die applied to the work head, wherein the end of the cycle is defined by the completion of the shearing either detected automatically by the control circuit (e.g. by means of a pressure sensor, a sensor of the electric quantities of the motor or a sensor of the relative position between punch and die) or recognised by the operator.
In each of the three work modes and as a function of the selected operation mode, the pressure release and the hydraulic liquid return, and thus the work head return towards its open position, may be manual, semi-automatic voluntary or automatic involuntary.

### Detailed description of the work parameters

The work parameter or parameters mentioned above with reference to the second work mode may be indicative for:
- a resistance or mechanical resistance variation against a further pumping or mutual approaching of the jaws 21, 22, or
- the reaching of a determined relative position of the jaws 21, 22, or
- an overload situation of a component of the hydraulic pump 2 or of the work head 11.

According to embodiments, the work parameters may comprise one or more of the following:
- the hydraulic liquid pressure,
- an electric quantity indicative of the power draw of the electric motor 6,
- the temperature of the electric motor 6,
- the distance of the jaws 21, 22.

The hydraulic pump 2 or, more generally the tool 1, may comprise one or more of the following:
- a pressure sensor 30 in fluid communication with the hydraulic liquid acting on the actuation piston 20 of the work head 11,
- an electric quantity sensor 31, in particular a current sensor,
- a temperature sensor 32 of the motor 6,
- an indicator or detector of the distance of the jaws 21, 22,
connected to the circuit control circuit 28 which monitors the work parameter or parameters and which can interrupt the actuation of the electric motor 6 automatically in dependency of one or more of the work parameters and of the selected work mode.

### Detailed description of the electronic control circuit 28

The electronic control circuit 28 is configured to process the signals coming from one or more of the sensors 30; 31; 32 and to control the electric motor 6 and/or the maximum pressure valve 25 or other valve of the hydrodynamic group 7, according to the actuation of the push-button panel 16 and of the quantities detected by the sensors 30;31;32.

The control circuit 28 comprises a processing unit (CPU), a memory associated with the processing unit (CPU), a communication interface associated with the processing unit (CPU) and adapted to receive signals (pressure, current, temperature) from the sensor 30, 31, 32 and to transmit the control signals to the electrical motor 6. The control circuit 28 further comprises a program for electronic processor loaded in the memory and configured to process the signals and the operations needed to implement the operation methods. The control circuit 28 is connected to the accumulator 5 when the accumulator 5 is coupled to the accumulator seat 4 and could also have its own battery, possibly adapted to be charged when the control circuit 28 is connected to the accumulator 5. The accumulator seat 4 is preferably formed in the pump housing 3.

### Detailed description of the hand held remote control 15

The hand held remote control 15 may be shaped as a joystick with an elongated lower gripping portion 34, on the front side of which the actuation button 18 (at the index finger) and the return button 29 (at the middle finger) are arranged, and an upper portion 35 which is wider with respect to the gripping portion 34, so as to rest on the hand without having to constantly tighten the fingers.

In an embodiment, the hand held remote control 15 comprises lighting means 33, preferably distanced from the display 17, e.g. one or two LED illuminators, adapted to work as a torch during the use of the hydraulic pump 2 or of the tool 1.

The lighting means 33 light up automatically with a light pressing on the actuation button 18 and/or with a light pressing on the return button 29, and remain on for a predetermined period of time, e.g. 25 seconds. The lighting means 33 may be deactivated by means of the push-button panel 16 in a guided procedure with the help of the display 17.

Advantageously, the lighting means 33 have a different direction of lighting different from a viewing direction of the display 17, preferably substantially parallel to the plane of the screen of the display 17.

The lighting means 33 are positioned in a front face of the upper portion 35, on the same side as the actuation 18 and return 29 buttons. The display is positioned on an upper side of the upper portion 35 and facing upwards (in use position). Furthermore, a touch key or mechanical button 36 is arranged either near or on the display 17 for selecting the operation mode, the functioning mode of the lighting means 33 (if included), and for selecting the viewing mode of the display 17 (if included).

The hand held remote control 15 may further comprise an acoustic warning device 37, which emits alarm or warning signals in fault situations, e.g. motor overheating or lack of hydraulic liquid.

ln an embodiment, in case of disconnection of the hand held remote control 15 from the pump housing 3, and thus from the control circuit 28, the control circuit 28 automatically switches to "cutting" work mode, while the return mode remains that previously set by means of the push-button panel 16 of the hand held remote control 15. For the work cycles performed in this condition, the control circuit 28 registers the missing hand held remote control 15 condition and the "cutting" work mode.

By reconnecting the hand held remote control 15 to the control circuit 28, the control circuit 28 restores the operation mode selected before disconnection. For the work cycles performed in this condition, the control circuit 28 registers, for each cycle, the selected operation mode and one or more work parameters detected by means of sensors during the work cycle.

ln an embodiment, the hydraulic pump 2 comprises a further push-button panel 38 and a further display 39 fitted on the pump housing 2, also connected to the control circuit 28 for controlling the hydraulic pump 2.

Advantageously, the connection of the hand held remote control 15 to the control circuit 28 disables the further push-button panel 38, and preferably also the further display 39.

### Detailed description of the display 17

The display 17 comprises for example a LCD or LED or OLED display.

The control circuit 28 controls the display 17 to view one or more of the following, in addition to the selected operation mode:
- a value indicative of a maximum compression force reached during a work cycle,
- a confirmation, e.g. "OK", of the compression or cutting process result as a function of at least one comparison of one or more work parameters detected during the work cycle with a corresponding preset or preselected reference value,
- an error warning, e.g. "FAIL", of the compression process result as a function of at least one comparison of one or more work parameters detected during the work cycle with a corresponding preset or preselected reference value,
- an overload warning of one of the components of the hydraulic pump or of the tool, e.g. thermal overload or electric overload of the motor 6,
- an instantaneous value of one of the work parameters detected by means of the sensors 30, 31, 32 (motor temperature, hydraulic oil pressure etc.).

When the hydraulic pump 2 is off and the control circuit 28 is started for the first time, the display 17 shows the selected operation mode for a minimum preset time, e.g. 2 seconds.

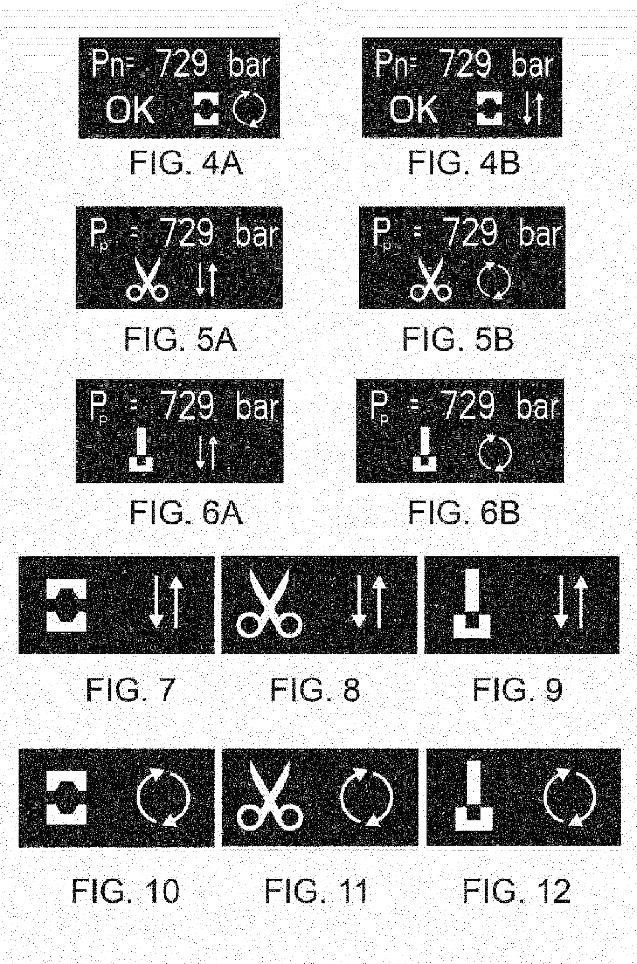

Figures from 7 to 12 show exemplary screen shots for the following six possible operation modes:
- compression with manual return (Fig. 7)
- cutting with manual return (Fig. 8)
- punching with manual return (Fig. 9)
- compression with voluntary semi-automatic return (Fig. 10)
- cutting with voluntary semi-automatic return (Fig. 11)
- punching with voluntary semi-automatic return (Fig. 12).

Figures from 4A to 6B diagrammatically show exemplary screenshots containing completion confirmation, the operative modes and the maximum pressure reached (where applicable) for a work cycle according to the six operation modes described above.

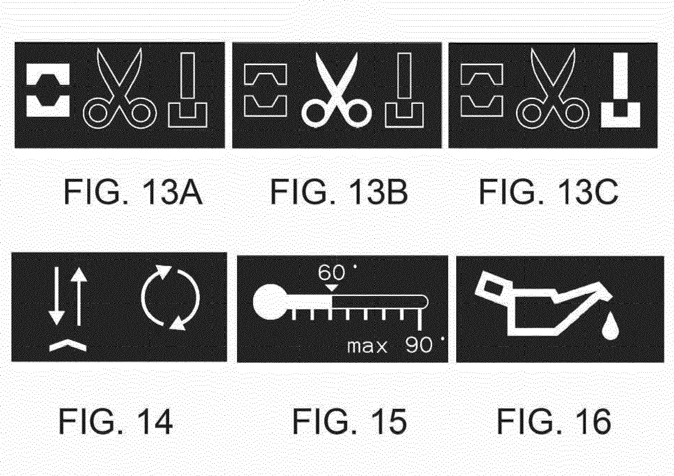

Figures 13A, 13B, 13C show exemplary screenshots of a selection menu of the work mode of the operation mode. The work mode is selected by passing from one icon to the successive one by pressing button 36 on the push-button panel 16. The passage from one icon to another may be viewed by an alteration, e.g. the filling of the shape, of the currently selected icon. The non-selected icons are shown as contour only. Holding button 36 pressed for an intermediate time, e.g. 1 second, will open selection mode. Touching button 36 will move the selection from one icon to the next.

Holding button 36 pressed for a long time, e.g. 2 seconds, will store the selection.

ln an embodiment, the control circuit 28 with push-button panel and display 17 allows to select a pressure measuring unit from at least two measuring systems, e.g. Imperial and UNI measuring systems.

Figure 14 shows an exemplary screenshot of a selection menu of the return mode of the operation mode.

Return mode can be selected by means of a cursor viewed near the icon which represents the currently selected return mode. Holding button 36 pressed for an intermediate time, e.g. one or two seconds, will open selection mode. Touching button 36 will switch the selection from one icon to the next. Holding button 36 pressed for a long time, e.g. 2 seconds, will store the selection.

According to a further embodiment, when the temperature sensor 32 detects a temperature of the motor 6 higher than a maximum temperature, e.g. 90°C, the control circuit 28 completes the current work cycle and then performs a safe shutdown of the motor 6 until the detected temperature drops under a threshold value, e.g. lower than 80°C.

During the safety shutdown, the display 17 shows a motor overheating warning message.

ln an embodiment (Figure 15), the display 17 shows the instantaneous (numeric) value of temperature of the motor 6, e.g. with a graphic view (thermometer symbol with scale) and/or the maximum allowed temperature, e.g. max 90°C.

ln an embodiment (Figure 16), when during the actuation of the motor 6 (step of pumping), the pressure sensor 30 detects no increase of hydraulic liquid pressure for a predetermined time, e.g. 30 sec, the control circuit 28 generates a non-sufficient hydraulic liquid warning by means of the display 17. This allows the operator to immediately recognise and remove the cause of anomalous operation by filling the tank 24.

ln an embodiment, the flexible control cable 12 may be replaced by a wireless signal connection.

## Claims

1. Electro-hydraulic pump (2) for hydrodynamic compression and/or cutting tools (1), comprising:
- a pump housing (3),
- an accumulator seat (4) suitable for receiving an accumulator (5),
- an electric motor (6) supported by the pump housing (3) and being able to be powered by the accumulator (5),
- a hydrodynamic group (7) supported by the pump housing (3) and connected with the electric motor (6) to effect a pressure increase of a hydraulic liquid,
- an electronic control circuit (28) connected with the electric motor (6) and with the accumulator (5) for controlling the electric motor (6),
- a flexible pressure hose (8) having a pump end (9) connected to the pump housing (3) and in communication with the hydrodynamic group (7), and a work end (10) connectable to a work head (11) of the tool (1) spaced apart from the pump housing (3), so as to communicate the pressure of the hydraulic liquid to the work head (11),
- a flexible control cable (12) having an end connected to the pump housing (3) and connected to the control circuit (28), and an opposite end to which a manual remote control (15) is connected for a remote actuation and control of the electro-hydraulic pump (2),
wherein the manual remote control (15) comprises:
- a push-button panel (16) with an actuation button (18) for starting the electric motor (6) and **characterised in that** the manual remote control (15) further comprises a button (36) for selecting an operation mode of the electro-hydraulic pump (2) among a plurality of preset operation modes, and
- a multifunction display (17) which displays the selected operation mode.

2. Electro-hydraulic pump (2) according to claim 1, wherein the manual remote control (15) comprises lighting means (33) suitable for acting as a torch during the use of the hydraulic pump (2).

3. Electro-hydraulic pump (2) according to claim 2, wherein the manual remote control (15) forms:
- a lower elongated handle portion (34), on whose front side are arranged an actuation button (18) for actuating the motor (6) and pressurising the hydraulic liquid, and a return button (29) for actuating a valve (25) of the hydrodynamic group (7) and returning the hydraulic liquid from the work head (11) to a tank (24) of the hydro-dynamic group (7),
- an upper portion (35) widened with respect to the handle portion (34) and suitable for resting on the hand that surrounds the lower handle portion (34),
- wherein the display (17) is positioned on an upper side of the upper portion (35) and facing upwards in use position,
- wherein the lighting means (33) are positioned in a front face of the upper portion (35), on the same front side as the actuation (18) and return (29) buttons.

4. Electro-hydraulic pump (2) according to one of the preceding claims, wherein the remote manual control (15) comprises an audible warning device (37) connected with the control circuit (28) and which emits alarm or warning signals in anomalous situations.

5. Electro-hydraulic pump (2) according to one of the preceding claims, wherein the control circuit (28) controls the display (17) of the manual remote control (15) so as to display one or more of:
- a value indicative of a maximum force or pressure reached during a work cycle as a function of the hydraulic liquid pressure detected by means of a pressure sensor (30) connected with the control circuit (28),
- a confirmation of the positive or negative outcome of the work cycle as a function of a comparison of a preset or preselected reference value with a corresponding work parameter detected during the work cycle by means of a sensor (30, 31, 32) connected with the control circuit (28),
- an overload warning of one of the components of the hydraulic pump (2) or the tool (1) as a function of a comparison of a preset or preselected reference value with a corresponding work parameter detected during the work cycle by means of a sensor (30, 31, 32) connected with the control circuit (28),
- an instantaneous value of at least one work parameter detected by means of a sensor (30, 31, 32) connected with the control circuit (28),
- a motor overheating warning message when a temperature sensor (32) connected with the control circuit (28) detects a temperature of the motor (6) higher than a preset maximum temperature,
- a hydraulic liquid shortage warning when, during the actuation of the motor (6), a pressure sensor (30) connected with the control circuit (28) detects an absence of hydraulic liquid pressure increase for a predetermined duration of time.

6. Electro-hydraulic pump (2) according to one of the preceding claims, wherein the operation modes each comprise:
- a work mode **characterised by** a criterion for the interruption of the pressurisation of the hydraulic liquid,
- a depressurisation and return mode of the hydraulic liquid from the work head (11) towards a tank (27) of the hydrodynamic unit (7), **characterised by** a degree of automation of the return of the hydraulic liquid.

7. Electro-hydraulic pump (2) according to one of the preceding claims, wherein the operation modes comprise a manual return mode wherein, after the termination of the pressurisation, the return of the hydraulic liquid from the work head (11) towards a tank (27) of the hydrodynamic group (7) is effected by pressing on a return button (29) of the push-button panel (16) for the entire duration necessary for reaching a desired opening width of the work head (11).

8. Electro-hydraulic pump (2) according to one of the preceding claims, wherein the operation modes comprise a voluntary semi-automatic return mode, wherein:
- after the termination of the pressurisation, the return of the hydraulic liquid from the work head (11) towards a tank (27) of the hydrodynamic unit (7) is delayed until the actuation button (18) is released and,
- only after the actuation button (18) is released, the return of the hydraulic liquid begins and continues automatically until a new actuation of the manual actuation button (18) and, in the absence of a timely new actuation of the actuation button (18), until reaching an open position of the work head (11).

9. Electro-hydraulic pump (2) according to one of the preceding claims, wherein the operation modes comprise a work mode, wherein the control circuit (28) turns off the motor (6) automatically with the opening of the maximum pressure valve (25) upon reaching the maximum calibration pressure.

10. Electro-hydraulic pump (2) according to one of the preceding claims, wherein the operation modes comprise a work mode wherein the control circuit (28) turns off the motor (6) automatically depending on a comparison of a predetermined pressure value with a pressure of the hydraulic liquid detected by means of a pressure sensor (30) connected with the control circuit (28).

11. Electro-hydraulic pump (2) according to one of the preceding claims, wherein the selectable operation modes comprise:
- a compression mode, and
- a cutting mode, and
- a punching mode.

12. Hydrodynamic tool (1) comprising the electro-hydraulic pump (2) according to one of the preceding claims and a work head (11) having:
- a body (19) with an actuation cylinder (27) which receives an actuation piston (20) movable by means of the pressure fluid,
- two jaws (21, 22) connected to the body (19) in a movable manner with respect to each other and movable by the actuation piston (20) between an open position and a closed position to perform the compression or the cutting,
- a return spring (23) that pushes the actuation piston (20) elastically towards a rest position wherein the jaws (21, 22) are in the open position.

## Patentansprüche

1. Elektrohydraulische Pumpe (2) für hydrodynamische Kompressions- und/oder Schneidwerkzeuge (1), umfassend:
- ein Pumpengehäuse (3),
- einen Akkumulatorsitz (4), welcher dazu geeignet ist, einen Akkumulator (5) aufzunehmen,
- einen Elektromotor (6), welcher von dem Pumpengehäuse (3) gehaltert ist und dazu in der Lage ist, von dem Akkumulator (5) mit Energie versorgt zu werden,
- eine hydrodynamische Gruppe (7), welche von dem Pumpengehäuse (3) gehaltert ist und mit dem Elektromotor (6) verbunden ist, um einen Druckanstieg einer Hydraulikflüssigkeit zu bewirken,
- eine elektronische Steuerschaltung (28), welche mit dem Elektromotor (6) und zum Steuern des Elektromotors (6) mit dem Akkumulator (5) verbunden ist,
- einen flexiblen Druckschlauch (8), welcher ein Pumpenende (9), welches mit dem Pumpengehäuse (3) verbunden ist und mit der hydrodynamischen Gruppe (7) in Verbindung steht, und ein mit einem Arbeitskopf (11) des Werkzeugs (1) verbindbares Arbeitsende (10) aufweist, welches von dem Pumpengehäuse (3) beabstandet ist, um den Druck der Hydraulikflüssigkeit auf den Arbeitskopf (11) zu übertragen,
- ein flexibles Steuerkabel (12), welches ein Ende, welches mit dem Pumpengehäuse (3) verbunden ist und mit der Steuerschaltung (28) verbunden ist, und ein entgegengesetztes Ende aufweist, mit welchem eine manuelle Fernsteuerung (15) für eine Fernbetätigung und -steuerung der elektrohydraulischen Pumpe (2) verbunden ist,
- wobei die manuelle Fernsteuerung (15) umfasst:
- einen Tastenblock (16) mit einer Betätigungstaste (18) zum Starten des Elektromotors (6) und
- **dadurch gekennzeichnet, dass** die manuelle Fernsteuerung (15) ferner umfasst:
- eine Taste (36) zum Auswählen eines Betriebsmodus der elektrohydraulischen Pumpe (2) aus einer Mehrzahl voreingestellter Betriebsmodi und
- eine Multifunktionsanzeige (17), welche den ausgewählten Betriebsmodus anzeigt.

2. Elektrohydraulische Pumpe (2) nach Anspruch 1, wobei die manuelle Fernsteuerung (15) Beleuchtungsmittel (33) umfasst, welche dazu geeignet sind, während der Verwendung der hydraulischen Pumpe (2) als eine Lampe zu wirken.

3. Elektrohydraulische Pumpe (2) nach Anspruch 2, wobei die manuelle Fernsteuerung (15) bildet:
- einen unteren länglichen Griffabschnitt (34), an dessen vorderer Seite eine Betätigungstaste (18) zum Betätigen des Motors (6) und mit Druck Beaufschlagen der Hydraulikflüssigkeit angeordnet sind, und eine Rückführtaste (29) zum Betätigen eines Ventils (25) der hydrodynamischen Gruppe (7) und Rückführen der Hydraulikflüssigkeit von dem Arbeitskopf (11) zu einem Behälter (24) der hydrodynamischen Gruppe (7),
- einen oberen Abschnitt (35), welcher in Bezug auf den Griffabschnitt (34) verbreitert ist und dazu geeignet ist, an der Hand anzuliegen, welche den unteren Griffabschnitt (34) umgibt,
- wobei die Anzeige (17) an einer oberen Seite des oberen Abschnitts (35) positioniert ist und in einer Verwendungsposition nach oben weist,
- wobei die Beleuchtungsmittel (33) in einer vorderen Fläche des oberen Abschnitts (35) an der gleichen vorderen Seite wie die Betätigungstaste (18) und die Rückführtaste (29) positioniert sind.

4. Elektrohydraulische Pumpe (2) nach einem der vorhergehenden Ansprüche, wobei die manuelle Fernsteuerung (15) eine akustische Warnvorrichtung (37) umfasst, welche mit der Steuerschaltung (28) verbunden ist und welche in anormalen Situationen Alarm- oder Warnsignale abgibt.

5. Elektrohydraulische Pumpe (2) nach einem der vorhergehenden Ansprüche, wobei die Steuerschaltung (28) die Anzeige (17) der manuellen Fernsteuerung (15) derart steuert, dass sie eines oder mehrere anzeigt, aus:
- einem Wert, welcher eine maximale Kraft oder einen maximalen Druck, welcher während eines Arbeitszyklus erreicht wird, als eine Funktion des Hydraulikflüssigkeitsdrucks angibt, welcher mittels eines Drucksensors (30) detektiert wird, welcher mit der Steuerschaltung (28) verbunden ist,
- einer Bestätigung des positiven oder negativen Ausgangs des Arbeitszyklus als eine Funktion eines Vergleichs eines voreingestellten oder vorausgewählten Referenzwerts mit einem entsprechenden Arbeitsparameter, welcher während des Arbeitszyklus mittels eines Sensors (30, 31, 32) detektiert wird, welcher mit der Steuerschaltung (28) verbunden ist,
- einer Überlastwarnung einer der Komponenten der hydraulischen Pumpe (2) oder des Werkzeugs (1) als eine Funktion eines Vergleichs eines voreingestellten oder vorausgewählten Referenzwerts mit einem entsprechenden Arbeitsparameter, welcher während des Arbeitszyklus mittels eines Sensors (30, 31, 32) detektiert wird, welcher mit der Steuerschaltung (28) verbunden ist,
- einem momentanen Wert wenigstens eines Arbeitsparameters, welcher mittels eines Sensors (30, 31, 32) detektiert wird, welcher mit der Steuerschaltung (28) verbunden ist,
- einer Motorüberhitzungswarnmeldung, wenn ein Temperatursensor (32), welcher mit der Steuerschaltung (28) verbunden ist, eine Temperatur des Motors (6) detektiert, welche höher als eine voreingestellte Maximaltemperatur ist,
- einer Hydraulikflüssigkeit-Knappheitswarnung, wenn während der Betätigung des Motors (6) ein Drucksensor (30), welcher mit der Steuerschaltung (28) verbunden ist, ein Fehlen eines Hydraulikflüssigkeitsdruckanstiegs für eine vorbestimmte Zeitdauer detektiert.

6. Elektrohydraulische Pumpe (2) nach einem der vorhergehenden Ansprüche, wobei die Betriebsmodi jeweils umfassen:
- einen Arbeitsmodus, welcher durch ein Kriterium für das Unterbrechen des mit Druck Beaufschlagens der Hydraulikflüssigkeit gekennzeichnet ist,
- einen Druckverringerungs- und Rückführmodus der Hydraulikflüssigkeit von dem Arbeitskopf (11) in Richtung eines Behälters (27) der hydrodynamischen Einheit (7), welcher durch einen Automatisierungsgrad der Rückführung der Hydraulikflüssigkeit gekennzeichnet ist.

7. Elektrohydraulische Pumpe (2) nach einem der vorhergehenden Ansprüche, wobei die Betriebsmodi einen manuellen Rückführmodus umfassen, wobei nach der Beendigung des Beaufschlagens mit Druck die Rückführung der Hydraulikflüssigkeit von dem Arbeitskopf (11) in Richtung eines Behälters (27) der hydrodynamischen Gruppe (7) durch ein Drücken auf eine Rückführtaste (29) des Tastenblocks (16) für die gesamte Dauer bewirkt wird, welche notwendig ist, um eine gewünschte Öffnungsweite des Arbeitskopfs (11) zu erreichen.

8. Elektrohydraulische Pumpe (2) nach einem der vorhergehenden Ansprüche, wobei die Betriebsmodi einen fakultativen halbautomatischen Rückführmodus umfassen, wobei:
- nach der Beendigung des Beaufschlagens mit Druck sich die Rückführung der Hydraulikflüssigkeit von dem Arbeitskopf (11) in Richtung eines Behälters (27) der hydrodynamischen Einheit (7) verzögert, bis die Betätigungstaste (18) freigegeben wird, und
- erst nachdem die Betätigungstaste (18) freigegeben worden ist, die Rückführung der Hydraulikflüssigkeit beginnt und bis zu einer neuen Betätigung der manuellen Betätigungstaste (18) und bei dem Fehlen einer rechtzeitigen neuen Betätigung der Betätigungstaste (18) bis zu einem Erreichen einer offenen Position des Arbeitskopfs (11) automatisch fortgesetzt wird.

9. Elektrohydraulische Pumpe (2) nach einem der vorhergehenden Ansprüche, wobei die Betriebsmodi einen Arbeitsmodus umfassen, wobei die Steuerschaltung (28) den Motor (6) mit der Öffnung des Maximaldruckventils (25) bis zu einem Erreichen des maximalen Kalibrierdrucks automatisch abschaltet.

10. Elektrohydraulische Pumpe (2) nach einem der vorhergehenden Ansprüche, wobei die Betriebsmodi einen Arbeitsmodus umfassen, wobei die Steuerschaltung (28) in Abhängigkeit eines Vergleichs eines vorbestimmten Druckwerts mit einem Druck der Hydraulikflüssigkeit, welcher mittels eines Drucksensors (30) detektiert wird, welcher mit der Steuerschaltung (28) verbunden ist, den Motor (6) automatisch abschaltet.

11. Elektrohydraulische Pumpe (2) nach einem der vorhergehenden Ansprüche, wobei die auswählbaren Betriebsmodi umfassen:
- einen Kompressionsmodus und
- einen Schneidmodus und
- einen Stanzmodus.

12. Hydrodynamisches Werkzeug (1), umfassend die elektrohydraulische Pumpe (2) nach einem der vorhergehenden Ansprüche und einen Arbeitskopf (11), welcher aufweist:
- einen Körper (19) mit einem Betätigungszylinder (27), welcher einen Betätigungskolben (20) aufnimmt, welcher mittels des Druckfluids bewegbar ist,
- zwei Klauen (21, 22), welche in einer in Bezug zueinander bewegbaren Weise mit dem Körper (19) verbunden sind und durch den Betätigungskolben (20) zwischen einer offenen Position und einer geschlossenen Position bewegbar sind, um die Kompression oder das Schneiden durchzuführen,
- eine Rückstellfeder (23), welche den Betätigungskolben (20) elastisch in Richtung einer Ruheposition drückt, wobei sich die Klauen (21, 22) in der offenen Position befinden.

## Revendications

1. Pompe électrohydraulique (2) pour des outils (1) hydrodynamiques de compression et/ou de coupe, comprenant :
- un boîtier de pompe (3),
- un siège d'accumulateur (4) adapté pour recevoir un accumulateur (5),
- un moteur électrique (6) supporté par le boîtier de pompe (3) et étant apte à être alimenté par l'accumulateur (5),
- un groupe hydrodynamique (7) supporté par le boîtier de pompe (3) et relié au moteur électrique (6) pour effectuer une augmentation de pression d'un liquide hydraulique,
- un circuit de commande (28) électronique connecté au moteur électrique (6) et à l'accumulateur (5) pour commander le moteur électrique (6),
- un tuyau à pression flexible (8) présentant une extrémité de pompe (9) reliée au boîtier de pompe (3) et en communication avec le groupe hydrodynamique (7), et une extrémité de travail (10) pouvant être reliée à une tête de travail (11) de l'outil (1) espacée du boîtier de pompe (3), de manière à communiquer la pression du liquide hydraulique à la tête de travail (11),
- un câble de commande (12) flexible présentant une extrémité reliée au boîtier de pompe (3) et connectée au circuit de commande (28), et une extrémité opposée à laquelle une télécommande manuelle (15) est connectée pour un actionnement et une commande à distance de la pompe électrohydraulique (2),
dans laquelle la télécommande manuelle (15) comprend :
- un panneau à bouton-poussoir (16) avec un bouton d'actionnement (18) pour démarrer le moteur électrique (6) et **caractérisée en ce que** la télécommande manuelle (15) comprend en outre un bouton (36) pour sélectionner un mode de fonctionnement de la pompe électrohydraulique (2) parmi une pluralité de modes de fonctionnement préréglés, et
- un afficheur multifonctionnel (17) qui affiche le mode de fonctionnement sélectionné.

2. Pompe électrohydraulique (2) selon la revendication 1, dans laquelle la télécommande manuelle (15) comprend des moyens d'éclairage (33) adaptés pour agir comme une torche pendant l'utilisation de la pompe électrohydraulique (2).

3. Pompe électrohydraulique (2) selon la revendication 2, dans laquelle la télécommande manuelle (15) forme :
- une partie poignée (34) allongée inférieure, sur le côté avant de laquelle sont agencés un bouton d'actionnement (18) pour actionner le moteur (6) et mettre sous pression le liquide hydraulique, et un bouton de retour (29) pour actionner une soupape (25) du groupe hydrodynamique (7) et ramener le liquide hydraulique de la tête de travail (11) à un réservoir (24) du groupe hydrodynamique (7),
- une partie supérieure (35) élargie par rapport à la partie poignée (34) et adaptée pour reposer sur la main qui entoure la partie poignée (34) inférieure,
- dans laquelle l'afficheur (17) est positionné sur un côté supérieur de la partie supérieure (35) et tourné vers le haut dans la position d'utilisation,
- dans laquelle les moyens d'éclairage (33) sont positionnés dans une face avant de la partie supérieure (35), sur le même côté avant que les boutons d'actionnement (18) et de retour (29).

4. Pompe électrohydraulique (2) selon l'une des revendications précédentes, dans laquelle la télécommande manuelle (15) comprend un dispositif d'avertissement sonore (37) connecté au circuit de commande (28) et qui émet des signaux d'alarme ou d'avertissement dans des situations anormales.

5. Pompe électrohydraulique (2) selon l'une des revendications précédentes, dans laquelle le circuit de commande (28) commande l'afficheur (17) de la télécommande manuelle (15) de manière à afficher un ou plusieurs parmi :
- une valeur indiquant une force ou pression maximale atteinte pendant un cycle de travail en fonction de la pression de liquide hydraulique détectée au moyen d'un capteur de pression (30) connecté au circuit de commande (28),
- une confirmation du résultat positif ou négatif du cycle de travail en fonction d'une comparaison d'une valeur de référence préréglée ou présélectionnée avec un paramètre de travail correspondant détecté pendant le cycle de travail au moyen d'un capteur (30, 31, 32) connecté au circuit de commande (28),
- un avertissement de surcharge d'un des composants de la pompe électrohydraulique (2) ou de l'outil (1) en fonction d'une comparaison d'une valeur de référence préréglée ou présélectionnée avec un paramètre de travail correspondant détecté pendant le cycle de travail au moyen d'un capteur (30, 31, 32) connecté au circuit de commande (28),
- une valeur instantanée d'au moins un paramètre de travail détectée au moyen d'un capteur (30, 31, 32) connecté au circuit de commande (28),
- un message d'avertissement de surchauffe de moteur lorsqu'un capteur de température (32) connecté au circuit de commande (28) détecte une température du moteur (6) plus élevée qu'une température maximale préréglée,
- un avertissement de manque de liquide hydraulique lorsque, pendant l'actionnement du moteur (6), un capteur de pression (30) connecté au circuit de commande (28) détecte une absence d'augmentation de pression de liquide hydraulique pendant une durée prédéterminée.

6. Pompe électrohydraulique (2) selon l'une des revendications précédentes, dans laquelle les modes de fonctionnement comprennent chacun :
- un mode de travail **caractérisé par** un critère pour l'interruption de la mise sous pression du liquide hydraulique,
- un mode de décompression et de retour du liquide hydraulique de la tête de travail (11) vers un réservoir (27) de l'unité hydrodynamique (7), **caractérisé par** un degré d'automatisation du retour du liquide hydraulique.

7. Pompe électrohydraulique (2) selon l'une des revendications précédentes, dans laquelle les modes de fonctionnement comprennent un mode de retour manuel dans lequel, après la fin de la mise sous pression, le retour du liquide hydraulique de la tête de travail (11) vers un réservoir (27) du groupe hydrodynamique (7) est effectué par pression sur un bouton de retour (29) du panneau à bouton-poussoir (16) pendant toute la durée nécessaire pour atteindre une largeur d'ouverture souhaitée de la tête de travail (11).

8. Pompe électrohydraulique (2) selon l'une des revendications précédentes, dans laquelle les modes de fonctionnement comprennent un mode de retour semi-automatique volontaire, dans lequel :
- après la fin de la mise sous pression, le retour du liquide hydraulique de la tête de travail (11) vers un réservoir (27) de l'unité hydrodynamique (7) est retardé jusqu'à ce que le bouton d'actionnement (18) soit relâché et,
- uniquement après que le bouton d'actionnement (18) est relâché, le retour du liquide hydraulique commence et continue automatiquement jusqu'à un nouvel actionnement du bouton d'actionnement (18) manuel et, en l'absence d'un nouvel actionnement en temps opportun du bouton d'actionnement (18), jusqu'à l'atteinte d'une position ouverte de la tête de travail (11).

9. Pompe électrohydraulique (2) selon l'une des revendications précédentes, dans laquelle les modes de fonctionnement comprennent un mode de travail, dans lequel le circuit de commande (28) éteint le moteur (6) automatiquement avec l'ouverture de la soupape à pression maximale (25) lors de l'atteinte de la pression d'étalonnage maximale.

10. Pompe électrohydraulique (2) selon l'une des revendications précédentes, dans laquelle les modes de fonctionnement comprennent un mode de travail dans lequel le circuit de commande (28) éteint le moteur (6) automatiquement en fonction d'une comparaison d'une valeur de pression prédéterminée avec une pression du liquide hydraulique détectée au moyen d'un capteur de pression (30) connecté au circuit de commande (28).

11. Pompe électrohydraulique (2) selon l'une des revendications précédentes, dans laquelle les modes de fonctionnement pouvant être sélectionnés comprennent :
- un mode compression, et
- un mode coupe, et
- un mode poinçonnage.

12. Outil (1) hydrodynamique comprenant la pompe électrohydraulique (2) selon l'une des revendications précédentes et une tête de travail (11) présentant :
- un corps (19) avec un cylindre d'actionnement (27) qui reçoit un piston d'actionnement (20) pouvant être déplacé au moyen du fluide de pression,
- deux mâchoires (21, 22) connectées au corps (19) d'une manière mobile l'une par rapport à l'autre et pouvant être déplacées par le piston d'actionnement (20) entre une position ouverte et une position fermée pour effectuer la compression ou la coupe,
- un ressort de rappel (23) qui pousse le piston d'actionnement (20) élastiquement vers une position de repos dans laquelle les mâchoires (21, 22) sont dans la position ouverte.
